# NEUE EUROPÄISCHE PATENTSCHRIFT

(11) **EP 3 257 625 B2**
(45) Veröffentlichungstag und Bekanntmachung des Hinweises auf die Entscheidung über den Einspruch: **01.11.2023**
(45) Hinweis auf die Patenterteilung: 05.08.2020
(21) Anmeldenummer: 16174319.0
(22) Anmeldetag: 14.06.2016
(51) Int. Cl.: B23Q 11/10, B24B 55/03, B23Q 3/157

(54) **VORRICHTUNG ZUM BEARBEITEN EINES BAUTEILS MIT EINEM WERKZEUG, DIE EINE FLUIDZUFUHRVORRICHTUNG UMFASST UND VERFAHREN ZUM EINRICHTEN EINER SOLCHEN VORRICHTUNG**
DEVICE FOR MACHINING A COMPONENT WITH A TOOL COMPRISING A FLUID SUPPLY DEVICE AND METHOD FOR SETTING UP SUCH A DEVICE
DISPOSITIF D'USINAGE D'UN COMPOSANT A L'AIDE D'UN OUTIL, COMPRENANT UN DISPOSITIF D'INTRODUCTION DE LIQUIDE ET PROCEDE DE FORMATION D'UN TEL DISPOSITIF

(43) Veröffentlichungstag der Anmeldung: 20.12.2017
(73) Patentinhaber: Klingelnberg AG, 8050 Zürich (CH)
(72) Erfinder: Scheider, Burkhard, 42499 Hückeswagen (DE)
(74) Vertreter: Janke Scholl Patentanwälte PartG mbB

(56) Entgegenhaltungen:
- EP-A1- 2 722 123
- EP-A2- 0 387 848
- WO-A1-2014/035789
- DE-A1- 2 404 704
- DE-A1- 19 844 242
- DE-A1-102012 104 263
- DE-U1- 29 915 499
- US-A1- 2014 273 750

## Beschreibung

Die vorliegende Erfindung betrifft Vorrichtungen, die zum Bearbeiten eines Bauteils mit einem Werkzeug ausgelegt sind, wobei die Vorrichtung eine Fluidzufuhrvorrichtung umfasst. Die Erfindung betrifft auch ein Verfahren zum Einrichten einer solchen Vorrichtung. Insbesondere geht es um Verzahnungsmaschinen.

### Stand der Technik

Es ist bekannt, dass man während einer spanenden Metallbearbeitung ein Kühl- oder Schmiermittel einsetzt. Heutige Bearbeitungsmaschinen und -zentren sind daher oft mit einer leistungsfähigen Flüssigmittelversorgung ausgestattet. Meistens wird ein schwanenhalsartiger Kopf manuell so eingestellt, dass der Flüssigkeitsstrahl, der aus dem Kopf austritt, die zu bearbeitenden Stelle trifft. Neben der reinen Kühl- oder Schmierwirkung geht es auch darum die Späne, die anfallen, effizient abzutransportieren.

Es hat sich gezeigt, dass die Einstellung einer solchen Flüssigmittelversorgung nicht immer optimal ist. Es kann somit unter Umständen nicht die volle Wirkung erzielt werden. Daher kommen vor allem im automatisierten Umfeld vermehrt Fluidzufuhrvorrichtungen zum Einsatz, die eine starre Leitungsanordnung umfassen, die mit Austrittsdüsen bestückt werden kann. Um eine optimale Kühl- oder Schmierwirkung zu erzielen, kann jedem Werkzeug eine entsprechend mit Austrittsdüsen bestückte Leitungsanordnung zugeordnet sein, bei welcher die Bestückung mit Austrittsdüsen und die Orientierung dieser Austrittsdüsen zuvor optimiert wurde. Wenn in einer solchen Konstellation nun ein Werkzeug in der Maschine zu wechseln ist, dann wird meist auch die Fluidzufuhrvorrichtung gewechselt.

In modernen Maschinen erfolgt der Wechsel der Fluidzufuhrvorrichtung teil-automatisiert. Es bedarf immer noch einer manuellen Intervention, um z.B. die Fluidzufuhrvorrichtung mittels Schrauben in der Maschine zu befestigen. Der entsprechende Zeitaufwand ist daher teilweise recht gross.

Eine Vorrichtung mit einem automatisierten Wechsel der Fluidzufuhrvorrichtung ist aus der EP 0 387 848 A2 bekannt. Das Dokument EP 2 404 704 A2 zeigt eine gattungsgemäße Vorrichtung, die den nächstliegenden Stand der Technik bildet.

Es hat sich auch gezeigt, dass trotz optimal angepasster Fluidzufuhrvorrichtung die Kühl- oder Schmierwirkung unter Umständen nicht optimal ist. Untersuchungen haben ergeben, dass die Kühl- oder Schmierwirkung vor allem dann an Wirkung nachlässt, wenn z.B. ein Schleifwerkzeug aufgrund von Abnutzungserscheinungen seine Form verändert, oder wenn ein Schleifwerkzeug nach dem Abrichten eine veränderte Form aufweist.

Es stellt sich daher die Aufgabe unproduktive Nebenzeiten, die z.B. durch manuelle Interventionen anfallen, zu reduzieren.

Gemäß Erfindung geht es insbesondere um den Einsatz eines Kühl- oder Schmiermittels in flüssiger Form oder in Gasform (hier allgemein als Fluid bezeichnet) bei der Bearbeitung von Metallwerkstücken. Insbesondere geht es um die spanende Nassbearbeitung von Zahnrädern.

Die Aufgabe wird erfindungsgemäß durch eine Vorrichtung gemäß Patentanspruch 1 gelöst.

Die Aufgabe wird erfindungsgemäß durch ein Verfahren gemäß Patentanspruch 11 gelöst.

Vorteilhafte Ausgestaltungen der Erfindung bilden die Gegenstände der abhängigen Patentansprüche.

Die Erfindung betrifft die Bearbeitung von Werkstücken/Bauteilen. Insbesondere geht es um die spanabhebenden Nassbearbeitung.

Vorzugsweise kommt bei allen Ausführungsformen eine starre Leitungsanordnung mit fest montierbaren Austrittsdüsen zum Einsatz, statt auf flexible Leitungen und schwanenhalsartige schwenkbare Auslassdüsen zu setzen.

Die Vorrichtung der Erfindung ist bei allen Ausführungsformen speziell zum Bearbeiten eines Bauteils mit einem Werkzeug ausgelegt und sie umfasst
- eine Werkzeugachse zum Drehantreiben des Werkzeugs,
- eine Fluidzufuhrvorrichtung mit einer Leitungsanordnung und mit mindestens einer Austrittsdüse, die dazu ausgelegt ist unter Druck ein Fluid durch die mindestens eine Austrittsdüse in Richtung des Werkzeugs abzugeben, wobei die Leitungsanordnung so an der Vorrichtung angeordnet ist, dass sie samt der mindestens einen Austrittsdüse Bewegungen des Werkzeugs solidarisch folgt, um jeweils im relativen räumlichen Bezug zum Werkzeug zu verbleiben.

Die Fluidzufuhrvorrichtung der Erfindung umfasst bei allen Ausführungsformen
- ein Spannsystem, das einen Koppelbereich aufweist, und das
- zum automatisierten Spannen der Leitungsanordnung an der Vorrichtung und/oder zum automatisierten Trennen der Leitungsanordnung von der Vorrichtung ausgelegt ist.

Die Vorrichtung der Erfindung umfasst bei allen Ausführungsformen eine elektro-mechanische, elektro-magnetische, hydraulische und/oder pneumatische Betätigungsvorrichtung, die es ermöglicht die Leitungsanordnung im Koppelbereich automatisch von der Vorrichtung zu trennen und/oder die Leitungsanordnung im Koppelbereich automatisch an der Vorrichtung einzuspannen. Es ist ein Vorteil der genannten Arten der Betätigungsvorrichtung, dass diese von der (CNC-)Steuerung der Vorrichtung aus kontrolliert und/oder betätigt werden können.

Die Vorrichtung der Erfindung umfasst bei allen Ausführungsformen vorzugsweise eine Fluidkupplung im Koppelbereich, die dazu ausgelegt ist nach dem automatisierten Spannen eine druckdichte Fluidverbindung zwischen einer Druckseite der Fluidzufuhrvorrichtung und der Leitungsanordnung samt der mindestens einen Austrittsdüse bereit zu stellen. Eine solche druckdichte Fluidverbindung ermöglicht das automatisierte Spannen der Leitungsanordnung.

Die Vorrichtung der Erfindung umfasst bei allen Ausführungsformen vorzugsweise mindestens eine mechanische Kupplungsvorrichtung im Koppelbereich, wobei diese Kupplungsvorrichtung auf der Vorrichtungsseite ein erstes Kupplungselement und auf der Seite der Leitungsanordnung ein zweites Kupplungselement umfasst, und wobei das erste Kupplungselement und das zweite Kupplungselement komplementär ausgeführt sind, um im gespannten Zustand (Form- und/oder Kraft-) schlüssig ineinander zu greifen. Der Einsatz mindestens einer solchen mechanischen Kupplungsvorrichtung hat den Vorteil, dass die Leitungsanordnung mechanisch stabil und robust mit der Vorrichtung verbunden werden kann. Außerdem hat der Einsatz einer mechanischen Kupplungsvorrichtung den Vorteil, dass keine Querkräfte auf die Fluidkupplung im Koppelbereich ausgeübt werden.

Die Vorrichtung der Erfindung kann bei allen Ausführungsformen unterschiedlich konfiguriert sein, was die Anzahl der Achsen und die Konstellation der Achsen anbelangt.

Die Vorrichtung der Erfindung umfasst bei allen Ausführungsformen eine erste Linearachse, wobei die Werkzeugachse an dieser ersten Linearachse angeordnet ist. Außerdem umfasst die Vorrichtung der Erfindung eine Zusatzachse, welche die Leitungsanordnung samt der mindestens einen Austrittsdüse so trägt, dass die Leitungsanordnung samt der mindestens einen Austrittsdüse relativ zu dem Werkzeug verlagerbar ist, um eine Feineinstellung, Nachführung oder Verschleisskompensation zu ermöglichen. Durch den Einsatz einer solchen Zusatzachse kann z.B. bei einer verschleissbedingten Änderung der Form des Werkzeugs die Leitungsanordnung nachgeführt werden. Oder es kann nach dem Abrichten eines Schleifwerkzeugs der Tatsache Rechnung getragen werden, dass sich beim Abrichten die Form des Schleifwerkzeugs ändert.

Die Zusatzachse kann bei allen Ausführungsformen an der ersten Linearachse der Vorrichtung angeordnet sein. In diesem Fall ist die Zusatzachse dazu ausgelegt, um eine Feineinstellung, Nachführung oder Verschleisskompensation zu ermöglichen. Ansonsten folgt die Leitungsanordnung solidarisch den Bewegungen der ersten Linearachse und des Werkzeugs.

Die Zusatzachse kann bei allen Ausführungsformen aber auch separat von der Linearachse so an der Vorrichtung angeordnet sein, dass sie unabhängig von einer Bewegung der ersten Linearachse eine Bewegung der Leitungsanordnung samt der mindestens einen Austrittsdüse ermöglicht. In dieser Konstellation sollte die Zusatzachse bei allen Ausführungsformen so mit der Linearachse koppelbar sein, dass die Zusatzachse automatisch allen Bewegungen der Linearachse folgt. Das Koppel kann auf mechanischem und/oder elektronischem Wege (z.B. durch Ansteuern der beiden Achse von der (CNC-) Steuerung der Vorrichtung) erfolgen.

Das Verfahren der Erfindung ist speziell zum 10 Einrichten (Rüsten) dieser Vorrichtung entwickelt worden. Das Verfahren der Erfindung umfasst bei allen Ausführungsformen die Schritte:
∘ Bereitstellen des Werkzeugs im Bereich der Vorrichtung,
∘ Bereitstellen der Leitungsanordnung im Bereich der Vorrichtung, die mit der mindestens einen Austrittsdüse bestückt ist,
∘ Überführen einer ersten Linearachse der Vorrichtung in eine Wechselposition durch das Bewegen mindestens einer Achse der Vorrichtung, Aufnehmen des Werkzeugs durch eine Werkzeugspindel, die von der ersten Linearachse getragen ist, und der Leitungsanordnung samt der mindestens einen Austrittsdüse durch ein Spannsystem, das von einer Zusatzachse getragen ist.

Vorzugsweise erfolgt das Aufnehmen des Werkzeugs und das Aufnehmen der Leitungsanordnung zeitgleich, da so die unproduktiven Nebenzeiten am deutlichsten reduziert werden können. Außerdem ermöglicht das zeitgleiche Aufnehmen Konstellationen, bei denen die Leitungsanordnung das Werkzeug teilweise umschließt.

Im Rahmen des Verfahrens der Erfindung wird ein automatisierter Spannvorgang durchgeführt, um das Werkzeug an der Werkzeugspindel zu spannen. Außerdem wird ein weiterer automatisierter Spannvorgang durchgeführt, um die Leitungsanordnung mittels des Spannsystems zu spannen.

Beim automatisierten Spannen der Leitungsanordnung wird bei allen Ausführungsformen eine elektro-mechanische, elektro-magnetische, hydraulische und/oder pneumatische Betätigungsvorrichtung der Vorrichtung betätigt.

Ganz besonders bevorzugt ist ein Ansatz, bei dem zum Bereitstellen des Werkzeugs und der Leitungsanordnung eine Werkstückspindel oder ein Gehäuse der Vorrichtung so in eine Übergabeposition geschwenkt wird, dass sich eine Oberfläche in einer horizontalen Lage befindet, wobei das Werkzeug und die Leitungsanordnung nebeneinander auf dieser Oberfläche bereitgestellt werden. Auf diese Art und Weise können das Werkzeug und die Leitungsanordnung zeitgleich oder nacheinander durch das Bewegen der ersten Linearachse und/oder der Zusatzachse angesteuert, aufgenommen und automatisch gespannt werden.

Die Bezugszeichenliste ist Bestandteil der Offenbarung.

### ZEICHNUNGEN

Die Figuren werden zusammenhängend und übergreifend beschrieben. Ausführungsbeispiele der Erfindung werden im Folgenden unter Bezugnahme auf die Zeichnungen näher beschrieben.
- **FIG. 1**: zeigt eine perspektivische Abbildung einer ersten beispielhaften mehrachsigen Schleifmaschine mit einer Fluidzufuhrvorrichtung der Erfindung in einer ersten Ausführungsform;
- **FIG. 2**: zeigt eine perspektivische Abbildung einer zweiten beispielhaften mehrachsigen Schleifmaschine mit einer Fluidzufuhrvorrichtung der Erfindung in einer zweiten Ausführungsform;
- **FIG. 3A**: zeigt eine perspektivische Ansicht eines Teils einer Ausführungsform der Fluidzufuhrvorrichtung der Erfindung in isolierter Darstellung;
- **FIG. 3B**: zeigt eine Seitenansicht eines oberen Teils der Fluidzufuhrvorrichtung der Fig. 3A;
- **FIG. 3C**: zeigt eine Explosionsansicht eines Teils der Fluidzufuhrvorrichtung der Fig. 3A;
- **FIG. 3D**: zeigt eine Draufsicht eines oberen Blocks der Fluidzufuhrvorrichtung der Fig. 3A;
- **FIG. 3E**: zeigt eine Ansicht des oberen Blocks der Fluidzufuhrvorrichtung der Fig. 3A von unten;
- **FIG. 3F**: zeigt eine perspektivische Ansicht eines unteren Blocks des Koppelbereichs und der Leitungsanordnung der Fluidzufuhrvorrichtung der Fig. 3A;
- **FIG. 3G**: zeigt eine Draufsicht des unteren Blocks des Koppelbereichs und der Leitungsanordnung der Fluidzufuhrvorrichtung der Fig. 3A;
- **FIG. 4**: zeigt eine perspektivische Ansicht einer beispielhaften Austrittsdüse in unmittelbarer Nähe eines Werkzeugs;
- **FIG. 5A**: zeigt eine Seitenansicht eines Teiles einer Vorrichtung der Erfindung vor dem Spannen der Leitungsanordnung und des Werkzeugs;
- **FIG. 5B**: zeigt eine Seitenansicht eines Teiles einer Vorrichtung der Erfindung während des Spannens der Leitungsanordnung und des Werkzeugs.

### Detaillierte Beschreibung

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

Es geht hier um Vorrichtungen 100, die auch als Bearbeitungsmaschinen bezeichnet werden. Diese Vorrichtungen 100 sind speziell zum Bearbeiten von Metallwerkstücken 30, wie zum Beispiel Zahnrädern, Wellen, Kupplungsteilen und dergleichen ausgelegt. Ein Werkstück 30 ist im Sinne der Erfindung ein zu bearbeitendes Bauteil.

Vorzugsweise handelt es sich bei allen Ausführungsformen um Vorrichtungen 100, die zum schleifenden Bearbeiten solcher Metallwerkstücke 30 ausgelegt sind, wobei diese Vorrichtungen 100 mit einem Schleifwerkzeug 20 bestückbar sind. Die Schleifwerkzeuge 20 werden hier allgemein als Werkzeuge 20 bezeichnet. Besonders bevorzugt ist die Anwendung der Erfindung in Verzahnungsschleifmaschinen 100, wobei in dieser Maschine 100 eine Topfschleifscheibe oder eine Tellerschleifscheibe als Werkzeug 20 zum Einsatz kommt.

Der Begriff Leitungsanordnung 53 kann sowohl starre als auch elastische Leitungen umfassen, die geeignet sind ein Fluid unter Druck weiter zu leiten. Bevorzugt sind starre Leitungsanordnungen 53, da diese genauer auszurichten und auch robuster sind.

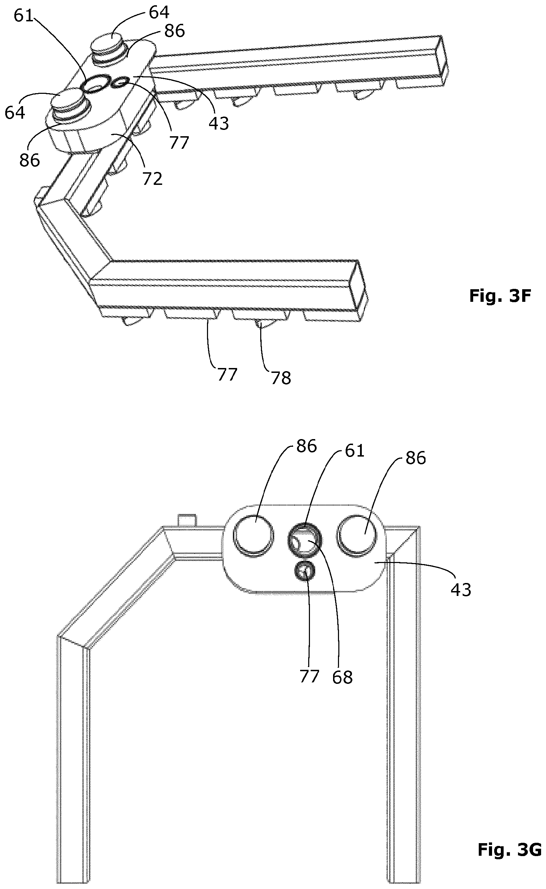

Vorzugsweise kommt bei allen Ausführungsformen eine geschlossene oder eine offene Ringleitung als Leitungsanordnung 53 zum Einsatz. In den Figuren sind offene Ringleitungen als Leitungsanordnungen 53 gezeigt, die in einer Draufsicht (siehe z.B. Fig. 3G) eine C-, U- oder L-Form haben.

Die Ringleitung kann aber bei allen Ausführungsformen aber auch geschlossen sein, um das Werkzeug 20 komplett zu umgeben. Solche Konstellationen werden als geschlossene Ringleitungen bezeichnet. Die Erfindung ermöglicht den Einsatz von geschlossenen Ringleitungen, die das Werkzeug 20 komplett umgeben, da beim Einrichten der Vorrichtung 100 das Werkzeug 20 und die Leitungsanordnung 53 zeitgleich aufgenommen und dann gespannt werden.

Vorzugsweise kommt bei allen Ausführungsformen ein Kühlöl und/oder ein Schmieröl als Fluid zum Einsatz.

Als automatisiertes Spannen wird ein Prozess bezeichnet, der in der Vorrichtung 100 (im Normalfall) ohne manuelle Intervention abläuft. Beim Spannen wird ein Teil 69 eines Spannsystems 40 der Fluidzufuhrvorrichtung 50 mit einem anderen Teil 72 des Spannsystems 40 druckdicht verbunden.

Das automatisierte Spannen wird vorzugsweise bei allen Ausführungsformen nach dem Schließen eines Gehäuses oder eines Schutzbereichs der Vorrichtung 100 durchgeführt.

Als automatisiertes Trennen wird ein Prozess bezeichnet, der in der Vorrichtung 100 (im Normalfall) ohne manuelle Intervention abläuft. Beim Trennen wird ein Teil 69 des Spannsystems 40 von einem anderen Teil 72 der Spannvorrichtung getrennt. Das automatisierte Trennen wird vorzugsweise auch bei geschlossenem Gehäuse oder Schutzbereich der Vorrichtung 100 durchgeführt. Erst nach dem Trennen wird typischerweise das Gehäuse oder der Schutzbereich geöffnet.

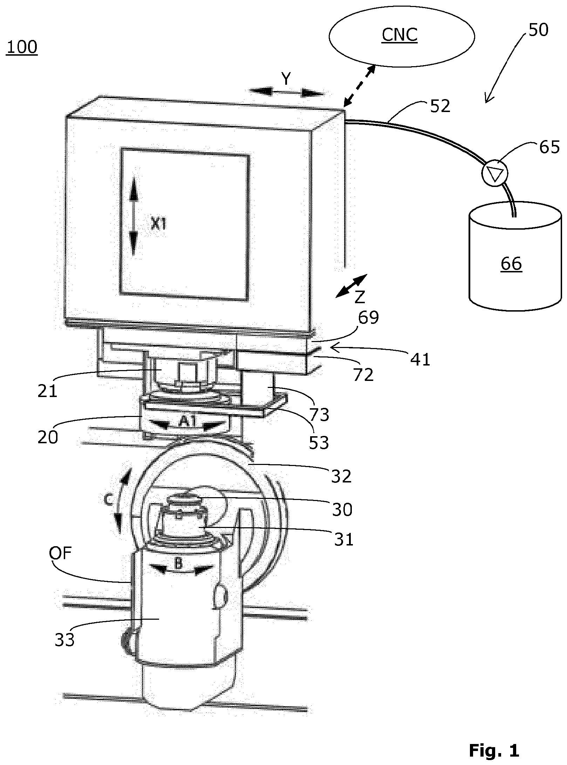

Fig. 1 zeigt eine perspektivische Abbildung einer ersten beispielhaften mehrachsigen Vorrichtung 100 (hier eine Schleifmaschine), die mit einer Fluidzufuhrvorrichtung 50 der Erfindung in einer ersten Ausführungsform bestückt ist.

Es handelt sich bei der Vorrichtung 100 vorzugsweise bei allen Ausführungsformen um eine CNC-gesteuerte Schleifmaschine, die mehrere nummerisch steuerbare Achsen A1, B, C, X1 und Y umfasst. Die Vorrichtung 100 hat typischerweise noch eine dritte Linearachse, die als Z-Achse bezeichnet wird.

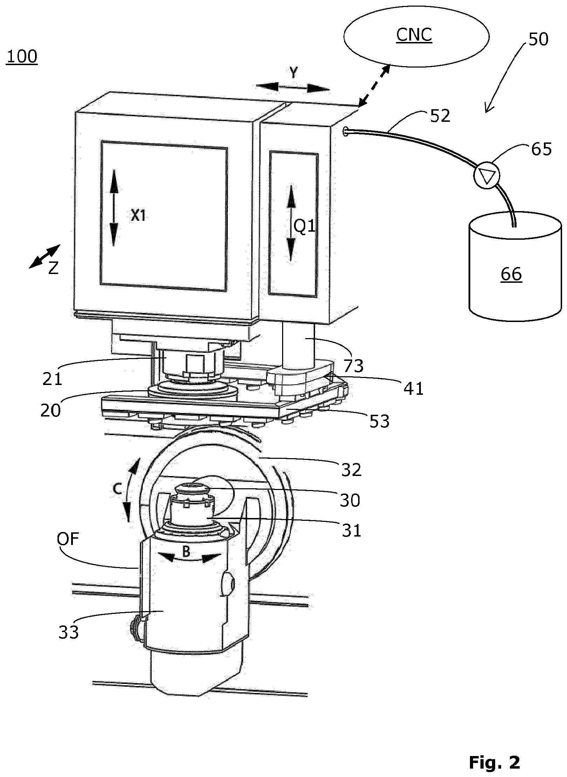

Bei dem in Fig. 1 gezeigten Ausführungsbei- spiel, umfasst die Vorrichtung 100 die folgenden nummerisch steuerbaren Achsen:
- A 1-Achse: Werkzeugachse, die hier vertikal hängend angeordnet ist, wobei die A 1-Achse eine Werkzeugspindel 21 umfasst, die mit einem Schleifwerk- zeug 20 bestückbar ist. In Fig. 1 ist ein Schleiftopf als Werkzeug 20 gezeigt. Das Werkzeug 20 ist mittels eines Antriebs der Werkzeugspindel 21 um die A 1-Achse drehantreibbar.
- B-Achse: Werkstückachse, die hier vertikal stehend angeordnet ist, wobei die B-Achse eine Werkstückspindel 31 umfasst, die mit einem Werkstück 30 bestückbar ist. Das Werkstück 30 ist mittels eines Antriebs der Werkstückspindel 31 um die B-Achse drehantreibbar. Der genannte Antrieb kann z.B. in einem Gehäuse 33 angeordnet sein.
- C-Achse: Bei der C-Achse handelt es sich um eine Schwenkachse, die hier senkrecht zur B-Achse steht. Die Vorrichtung 100 umfasst einen Schwenkteller 32 und einen Schwenkantrieb. Der Schwenkantrieb ermöglicht es den Schwenkteller 32 um die C-Achse zu schwenken. Der Schwenkteller 32 trägt hier das Gehäuse 33, die Werkstückspindel 31 und das Werkstück 30. Vorzugsweise ist die C-Achse so ausgelegt, dass die Werkstückspindel 31, respektive das Gehäuse 33, in eine Wechselposition überführt werden kann. In dieser Wechselposition liegt die B- Achse horizontal und eine Oberfläche OF des Gehäuses 33 der Werkstückspindel 31 befindet sich in einer horizontalen Orientierung. Weitere Details hierzu werden später erläutert.
- X1-Achse: Linearachse (hier auch erste Linearachse genannt), die hier senkrecht im Raum steht. An dieser X1-Achse ist hier die Werkzeugspindel 21 samt des Schleifwerkzeugs 20 angeordnet. Bei der ersten Ausführungsform, die in Fig. 1 gezeigt ist, trägt die X1-Achse auch die Fluidzufuhrvorrichtung 50. Die Fluidzufuhrvorrichtung 50 ist somit direkt an der X1-Achse angeordnet. Bei der zweiten Ausführungsform, die in Fig. 2 gezeigt ist, gibt es eine separate Q1-Achse (Zusatzachse genannt), die z.B. parallel zur X 1-Achse angeordnet sein kann. Die Q1- Achse trägt in diesem Fall die Fluidzufuhrvorrichtung 50. Es ist auch eine dritte Ausführungsform möglich, bei welcher die X1-Achse die Q1-Achse samt der Fluidzufuhrvorrichtung 50 trägt. Die Fluidzufuhrvorrichtung 50 ist in diesem Fall indirekt an der X1-Achse angeordnet.
- Y-Achse: Linearachse (hier auch zweite Linearachse genannt), die zum horizontalen Verschieben ausgelegt ist, wie in Fig. 1 gezeigt.
- Z-Achse: Linearachse (hier auch dritte Linearachse 20 genannt), die zum horizontalen Verschieben ausgelegt ist, wie in Fig. 1 gezeigt.
- Q1-Achse (Zusatzachse genannt): Linearachse, die bei allen Ausführungsformen zum Einsatz kommen kann. Diese Q1-Achse trägtdie Fluidzufuhrvorrichtung 50. Die Q1-Achse dient als Zusatzachse, welche die Leitungsanordnung 53 samt mindestens einer Austrittsdüse 51 so trägt, dass die Leitungsanordnung 53 samt der Austrittsdüse 51 relativ zu dem Werkzeug 20 verlagert werden kann, um eine Feineinstellung, Nachführung oder Verschleisskompensation zu ermöglichen. Die Q1-Achse ermöglicht bei allen Ausführungsformen ein relatives Verstellen der Position der Leitungsanordnung 53 in Bezug zum Werkzeug 20, wobei dieses relative Verstellen bei allen Ausführungsformen vorzugsweise parallel zur Richtung der A 1-Achse erfolgt. Durch das relative Verstellen kann z.B. eine Verschleisskompensation vorgenommen werden, nachdem das Werkzeug 20 durch einen Abrichtvorgang abgerichtet worden ist. Im Rahmen eines Abrichtvorgangs wird z.B. die Höhe eines Schleiftopfs leicht reduziert. Durch den Einsatz der Q1-Achse, kann die Position der Leitungsanordnung 53 in Bezug zum Werkzeug 20 an die geänderte Höhe angepasst werden.

In Fig. 1 und in Fig. 2 sind nur einige Teile der Fluidzufuhrvorrichtungen 50 gezeigt.

Eine Fluidzufuhrvorrichtung 50 umfasst bei allen Ausführungsformen z.B. einen Fluidtank 66 und eine Pumpe 65, um ein Fluid unter Druck in die Leitungsanordnung 53 fördern zu können. Der Abschnitt der Fluidzufuhrvorrichtung 50, der zwischen der Pumpe 65 und der Leitungsanordnung 53 liegt, wird auch als Druckseite der Fluidzufuhrvorrichtung 50 bezeichnet. Diese Elemente der Fluidzufuhrvorrichtung 50 sind in den Figuren 1 und 2 nur schematisch angedeutet, da es hier zahlreiche Möglichkeiten gibt, um ein Fluid unter Druck in die Leitungsanordnung 53 fördern zu können.

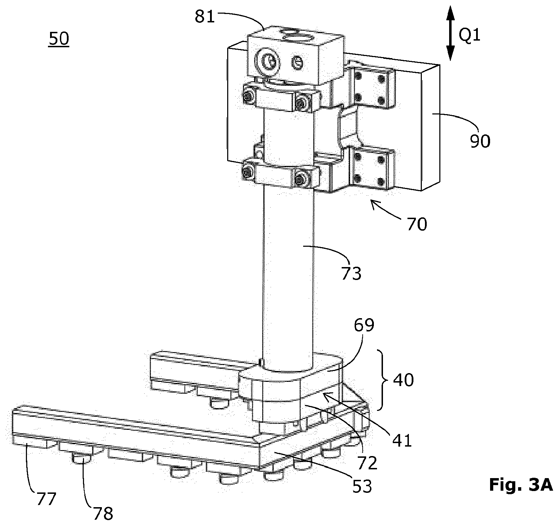

Jede Fluidzufuhrvorrichtungen 50 der Erfindung umfasst einen Spannbereich 40 (siehe z.B. Fig. 3A), der zum automatisierten Spannen der Leitungsanordnung 53 und/oder zum automatisierten Trennen der Leitungsanordnung 53 ausgelegt ist.

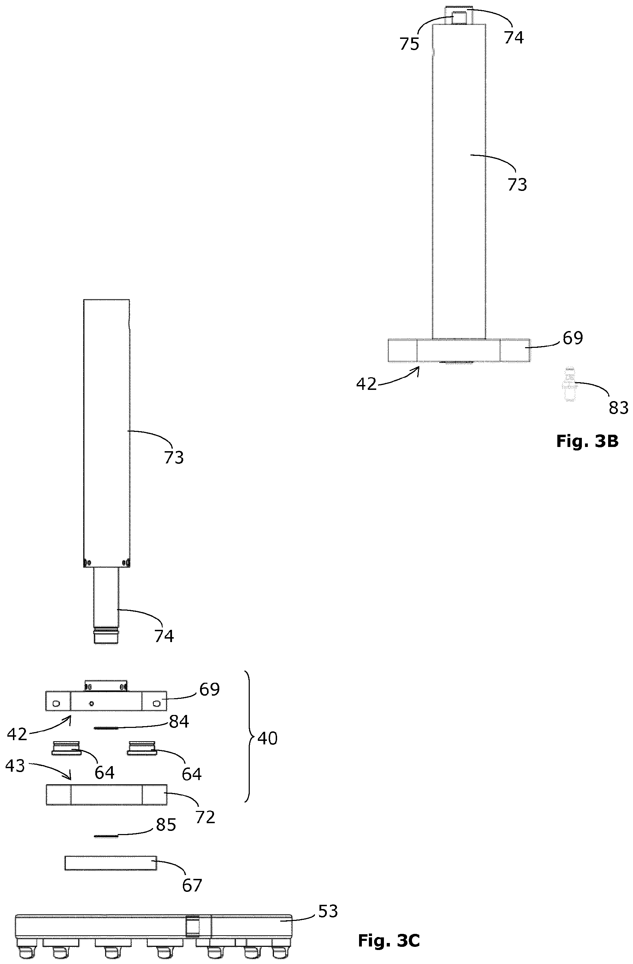

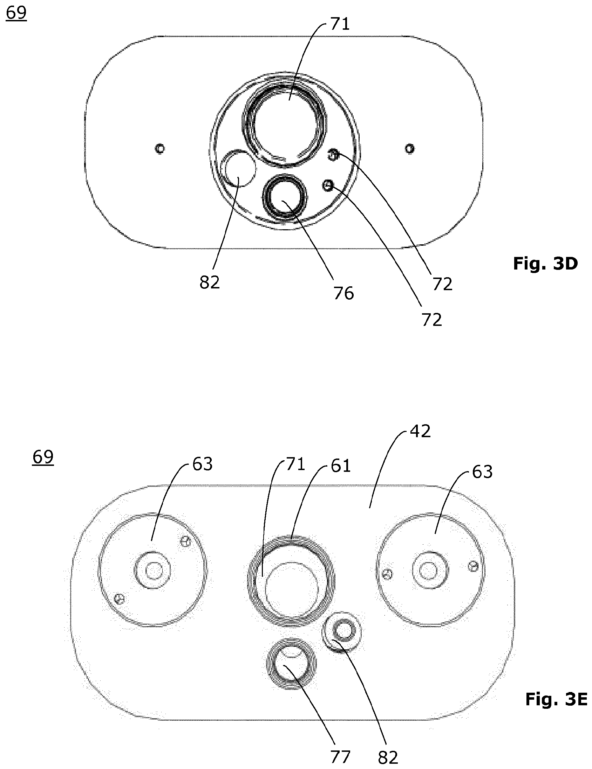

Zu diesem Zweck umfasst der Spannbereich 40 einen Koppelbereich 41, wie in den Figuren 1, 2 sowie 3A bis 3G anhand verschiedener Ausführungsformen gezeigt. Im Koppelbereich 41 ist eine erste Fläche 42 vorgesehen, die der Vorrichtung 100 zugeordnet ist. In den Figuren 3B und 3C weist diese erste Fläche 42 nach unten. In Fig. 3E ist die erste Fläche 42 sichtbar.

Im Koppelbereich 41 ist eine zweite Fläche 43 vorgesehen, die der Leitungsanordnung 53 zugeordnet ist. In Fig. 3C zeigt diese zweite Fläche 43 nach oben. In Fig. 3G liegt diese zweite Fläche 43 oben.

Die erste Fläche 42 und die zweite Fläche 43 sind bei allen Ausführungsformen als komplementäre Flächen ausgelegt, die sich im montierten Zustand aneinander schmiegen. Vorzugsweise kommen zwei planebene Flächen 42 und 43 zum Einsatz, wie in den Figuren gezeigt. Die Flächen 42, 43 können bei allen Ausführungsformen aber auch eine andere Form (z.B. eine gekrümmte Form) haben.

Im Koppelbereich 41 ist bei allen Ausführungsformen eine Fluidkupplung 61, 62, 84 vorgesehen, die dazu ausgelegt ist nach dem automatisierten Spannen eine druckdichte Fluidverbindung zwischen der Druckseite der Fluidzufuhrvorrichtung 50 und der Leitungsanordnung 53 samt der mindestens einen Austrittsdüse 51 bereit zu stellen.

Die Fluidkupplung 61, 62, 84 kann z.B. im Bereich der ersten Fläche 42 eine Austrittsöffnung 71 und im Bereich der zweiten Fläche 43 eine Eintrittsöffnung 68 aufweisen. Die Austrittsöffnung 71 steht mit der Druckseite der Fluidzufuhrvorrichtung 50 in Fluidverbindung (z.B. über eine Fluidleitung 74) und die Eintrittsöffnung 68 steht mit der Leitungsanordnung 53 in Fluidverbindung.

Das Spannsystem 40 ist so ausgelegt, dass die Eintrittsöffnung 68 und die Austrittsöffnung 71 optimal zueinander ausgerichtet sind. Vorzugsweise kommt im Übergangsbereich zwischen der Austrittsöffnung 71 und der Eintrittsöffnung 68 mindestens ein O-förmiger Dichtring 84 (siehe Fig. 3C) zum Einsatz, um eine druckdichte Fluidverbindung zu ermöglichen.

Zusätzlich zu den Mitteln (hier als Fluidkupplung 61, 62, 85 bezeichnet), die eine druckdichte Fluidverbindung ermöglichen, umfasst die Vorrichtung 100 im Koppelbereich 41 vorzugsweise bei allen Ausführungsformen mindestens eine mechanische Kupplungsvorrichtung. Diese Kupplungsvorrichtung umfasst auf der Seite der Leitungsanordnung 53 ein erstes Kupplungselement 64 und auf der Vorrichtungsseite ein zweites Kupplungselement 63, wobei das erste Kupplungselement 64 und das zweite Kupplungselement 63 komplementär zueinander ausgeführt sind.

In Fig. 3A bis 3G ist dieses Prinzip der komplementär ineinander greifenden Kupplungselemente 63 und 64 anhand eines Beispiels gezeigt. Man kann in den Figuren 3C und 3F zwei erste Kupplungselemente 64 erkennen. In Fig. 3C sind diese ersten Kupplungselemente 64 separat gezeigt. In Fig. 3F ist zu erkennen, dass diese Kupplungselemente 64 in je einer Öffnung 86 der zweiten Fläche 43 montiert sein können. Die beiden ersten Kupplungselemente 64 können fest in der ersten Fläche 42 verankert sein (z.B. verschraubt oder mit Madenschrauben fixiert). Die beiden Öffnung 86 sind in Fig. 3G gut zu erkennen.

In Fig. 3E ist gezeigt, dass zwei Aufnahmeöffnungen in der Fläche 42 als zweite Kupplungselemente 63 dienen können.

Die beiden ersten Kupplungselemente 64 können, wie ein Spannnippel, beispielsweise eine im Wesentlichen zylindrische Form haben. Die Öffnungen 63 haben in diesem Fall die Form eines Spanntopfs.

Vorzugsweise kommen bei allen Ausführungsformen Kupplungselemente (z.B. die Kupplungselemente 64) zum Einsatz, die dazu ausgelegt sind in komplementär geformte Kupplungselemente (z.B. die Öffnungen/Kupplungselemente 63) einzugreifen.

Anhand der Fig. 3D sind weitere Details des Spannsystems 40 beschrieben. Wie bereits erwähnt, kann das Spannsystem 40 im Koppelbereich 41 eine erste Fläche 42 und eine zweite Fläche 43 umfassen. Die erste Fläche 42 ist vorzugsweise bei allen Ausführungsformen an einem oberen Block 69 angeordnet. Dieser obere Block 69 wird auch als Q1-Aufnahme bezeichnet, da dieser Block 69 der Vorrichtung 100, respektive der Q1-Achse zugeordnet ist. In Fig. 3D ist der obere Block 69 von oben gezeigt. Die erste Fläche 42 ist nicht sichtbar, da sie nach unten in die Zeichenebene hinein zeigt. In Fig. 3D kann man die bereits erwähnte Durchgangsöffnung 71 erkennen, die dazu dient das Fluid von der Pumpe 65 her kommend durch den oberen Block 69 hindurch zu führen.

Weiterhin sind zwei Drucköffnungen 72 erkennen, die dazu dienen das Spannen und/oder Trennen durch das Anlegen eines Drucks zu ermöglichen. Es kann bei allen Ausführungsformen auch mit nur eine Drucköffnung 72 gearbeitet werden.

Die erwähnte Drucköffnung 72, oder die beiden Drucköffnungen 72, können Teil einer hydraulischen und/oder pneumatischen Betätigungsvorrichtung sein, die es ermöglicht die Leitungsanordnung 53 im Koppelbereich 41 automatisch von der Vorrichtung 100 zu trennen und/oder die Leitungsanordnung 53 im Koppelbereich 42 automatisch an der Vorrichtung 100 einzuspannen.

Statt einer hydraulischen und/oder pneumatischen Betätigungsvorrichtung, kann bei allen Ausführungsformen auch eine elektro-mechanische und/oder elektro-magnetische Betätigungsvorrichtung zum Einsatz kommen.

Vorzugsweise ist der obere Block 69 im Inneren mit Druckleitungen versehen, die es ermöglichen Stellglieder beim Anlegen eines Drucks so zuzustellen, dass z.B. männliche Kupplungselemente (z.B. die ersten Kupplungselemente 64), die in diesem Fall im Bereich eines unteren Blocks 72 befestigt sind, temporär in dem oberen Block 69 zu spannen. Die Druckleitungen im Inneren des oberen Blocks 69 steht mit der Drucköffnung 72 oder den Drucköffnungen 72 in Druckverbindung.

Derartige Stellglieder können bei allen Ausführungsformen so in dem oberen Block 69 und/oder in dem unteren Block 72 angeordnet sein, dass sie mit einem oder mehreren Kupplungselement/en 63, 64 in Wechselwirkung treten, um den unteren Block 72 samt der Leitungsanordnung 53 an dem oberen Block 69 fest zu spannen, und/oder um den unteren Block 72 samt der Leitungsanordnung 53 von dem oberen Block 69 zu trennen.

Bei allen Ausführungsformen kann aber auch mindestens eines der Kupplungselemente 63, 64 mit einem integrierten Stellglied ausgestattet sein, das z.B. beim Anlegen eines Drucks in eine Spannposition übergeht, oder das beim Anlegen eines Drucks in eine Trennposition übergeht.

Bei allen Ausführungsformen kann die Fluidzufuhrvorrichtung 50 mit mindestens einem Näherungssensor 83 (siehe Fig. 3B) ausgestattet sein, der vorzugsweise im Bereich des oberen Blocks 69 angeordnet ist, um beim Spannvorgang das Annähern des unteren Blocks 72 an den oberen Block 69 zu signalisieren. Sobald der Näherungssensor 83 ein Signal abgibt, welches das Erreichen einer Endposition des unteren Blocks 72 gegenüber dem oberen Block 69 signalisiert, kann über die Druckleitungen ein Druck an eines oder mehrere Stellglieder angelegt werden, um das/die Kupplungselement/e 63, 64 zu spannen und die beiden Blöcke 69, 72 fest miteinander zu verbinden.

Der Näherungssensor 83 kann bei allen Ausführungsformen in einem Durchgangsloch 82 des oberen Blocks 69 sitzen (siehe Fig. 3D und 3E).

Vorzugsweise sind im Bereich des unteren Blocks 72, der Leitungsanordnung 53 und der Austrittsdüse(n) 51 keine elektrischen Elemente angeordnet. Das hat den Vorteil, dass lediglich der obere Block 69 elektrisch mit der Vorrichtung 100 verbunden werden muss.

Vorzugsweise sind im Bereich des unteren Blocks 72, der Leitungsanordnung 53 und der Austrittsdüse(n) 51 keine Elemente angeordnet, die per Druck betätigt werden. Das hat den Vorteil, dass lediglich der obere Block 69 drucktechnisch mit der Vorrichtung 100 verbunden werden muss, um z.B. das Spannen und/oder Trennen automatisch durch den Einsatz von hydraulischen und/oder pneumatischen Betätigungsvorrichtungen vornehmen zu können.

Vorzugsweise dient bei allen Ausführungsformen der untere Block 72 als Aufnahme oder Träger der Leitungsanordnung 53, wie in den Figuren 2, sowie 3A bis 3G gezeigt. Zwischen der Leitungsanordnung 53 und dem unteren Block 72 kann eine Zwischenplatte 67 angeordnet sein, die z.B. als Adapter ausgelegt sein kann. Die Zwischenplatte 67, falls vorhanden, weist mindestens eine Öffnung auf, um das Fluid von dem unteren Block 72 in die Leitungsanordnung 53 leiten zu können.

Die Leitungsanordnung 53 kann jedoch auch von einem Führungsrohr 73 getragen werden, wie in Fig. 1 gezeigt.

Bei einer Ausführungsform gemäß Fig. 1, kann der obere Block 69 z.B. im Bereich der X1-Achse befestigt sein. Der untere Block 72 ist im Koppelbereich 41 mit dem oberen Block 69 verbunden. Das Führungsrohr 73 erstreckt sich in diesem Fall von dem unteren Block 72 nach unten und trägt am unteren Ende die Leitungsanordnung 53, wie in Fig. 1 gezeigt. Das Spannen und Trennen findet in diesem Fall im Koppelbereich 41 statt, wobei die beiden Blöcke 69 und 72 wie erwähnt ausgestattet sein können.

Vorzugsweise umfassen alle Ausführungsformen eine Reinigungsvorrichtung, die in das Spannsystem 40 integriert sein kann, wie im Folgenden beschrieben. Die Reinigungsvorrichtung kann mit dem selben Fluid betrieben werden, das zum Kühlen und/oder Schmieren eingesetzt wird. Es kann aber bei allen Ausführungsformen auch ein anderes Fluid als Reinigungsmittel eingesetzt werden. In diesem Fall ist z.B. ein weiterer Tank mit Pumpe vorgesehen, um das Reinigungsmittel durch das Spannsystem 40 hindurch in die Leitungsanordnung 53 pumpen zu können. Im Bereich der Leitungsanordnung 53 tritt das Reinigungsmittel durch die Austrittsdüse/n 51 aus, um die Leitungsanordnung 53, die Düse/n 51 und/oder das Werkzeug 20 zu reinigen. Die Reinigungsvorrichtung kann aber auch zum Rückspülen ausgelegt sein.

In Fig. 3B ist gezeigt, dass sowohl eine Fluidleitung 74 als auch eine Reinigungsmittelleitung 75 innenliegend in einem Führungsrohr 73 angeordnet sein können. In dem oberen Block 69 kann eine Durchgangsöffnung 76 zum Durchleiten des Reinigungsmittels in die Leitungsanordnung 53 vorgesehen sein. Die Durchgangsöffnung 76 kann beim Verbinden des oberen Blocks 69 mit dem unteren Block 72 mit einer Durchgangsöffnung 77 verbunden sein, um das Reinigungsmittel in die Leitungsanordnung 53 zu leiten.

Vorzugsweise umfassen alle Ausführungsformen mindestens eine Austrittsdüse 51, die lösbar mit der Leitungsanordnung 53 verbindbar sind. Vorzugsweise kommen zum Verbinden Schraub- und/oder Steckverbindungen zum Einsatz.

In den Figuren 3A bis 3G ist eine Ausführungsform der Leitungsanordnung 53 gezeigt, bei der auf der Unterseite der Leitungsanordnung 53 insgesamt 14 Andockstellen vorgesehen sind. An jeder dieser 14 Andockstellen ist je ein kleiner rechteckiger Aufnahmeblock 77 montiert. In Fig. 3A ist lediglich einer dieser Aufnahmeblöcke mit dem Bezugszeichen 77 versehen.

Vorzugsweise umfassen alle Ausführungsformen Aufnahmeblöcke 77, die mit einem Blinddeckel 78 bestückt werden können, oder an denen eine Austrittsdüse 51 angeschraubt und/oder angesteckt werden kann. In Fig. 3A ist lediglich einer dieser Blinddeckel mit dem Bezugszeichen 78 versehen. In Fig. 3A sind keine Austrittsdüsen 51 gezeigt, um die Figur nicht zu überfrachten.

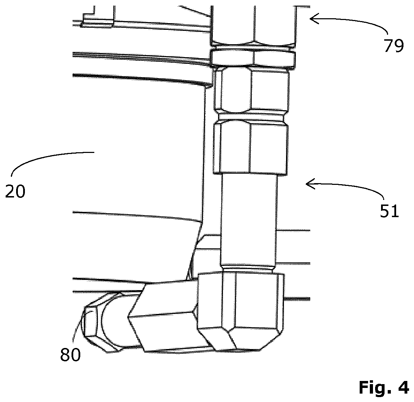

In Fig. 4 ist eine einzelne Austrittsdüse 51 als Beispiel gezeigt. Die Austrittsdüse 51 sitzt hier direkt neben einem Schleiftopf, der als Werkzeug 20 dient.

Die Austrittsdüse 51 kann bei allen Ausführungsformen z.B. einen Koppelbereich 79 (z.B. mit einer Schraubhülse) umfassen, um die Austrittsdüse 51 mit der Leitungsanordnung 53 verbinden zu können (z.B. über Aufnahmeblöcke 77, wie erwähnt).

Die Austrittsdüse 51 kann bei allen Ausführungsformen z.B. einen Düsenkopf 80 umfassen, um das Fluid unter hohem Druck in Richtung des Werkzeugs 20 sprühen zu können. Die hier gezeigte Austrittsdüse 51 ist lediglich als Beispiel zu verstehen.

Das erwähnte Führungsrohr 73 kann bei allen Ausführungsformen mit der Q1-Achse verbunden sein, wie in Fig. 2 gezeigt. In Fig. 3A sind beispielhafte Befestigungsmittel 70 gezeigt, um das Führungsrohr 73 z.B. an einem Vertikalschlitten 90 der Q1-Achse anflanschen zu können. Der Vertikalschlitten 90 ist in Fig. 3A rein schematisch durch einen Block dargestellt.

Vorzugsweise umfassen alle Ausführungsformen einen Fluidblock 81, der in Fig. 3A oberhalb des Führungsrohrs 73 gezeigt ist. Der Fluidblock 81 kann z.B. zum Anschließen der Fluidleitung 52 und/oder Kühlmittel- und/oder Druckleitungen und/oder Elektroleitungen dienen.

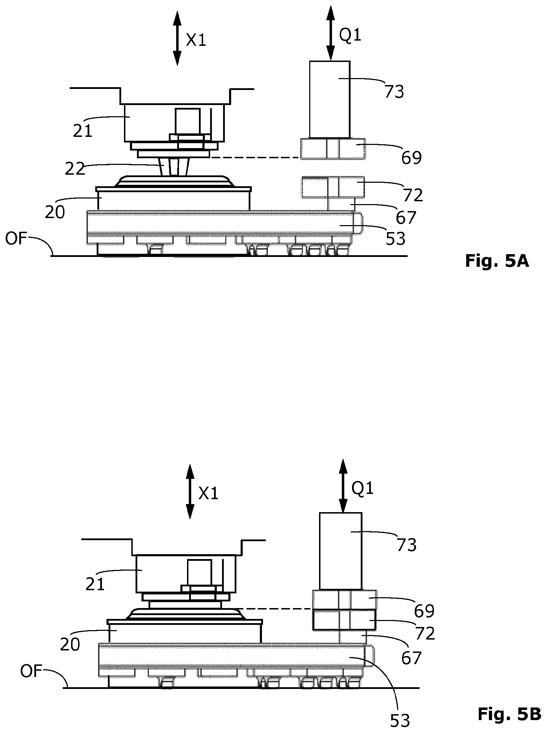

Fig. 5A zeigt eine Seitenansicht eines Teiles einer Vorrichtung 100 der Erfindung vor dem Spannen der Leitungsanordnung 53 und des Werkzeugs 20. Das Werkzeug 20 und die Leitungsanordnung 53 befinden sich im gezeigten Moment auf einer Oberfläche OF. Die Leitungsanordnung 53 ist so angeordnet, dass sie das Werkzeug 20 umgibt. Die beiden Achsen X1 und Q1 werden nun gekoppelt parallel nach unten bewegt, falls es sich um Achsen handelt, die unabhängig voneinander sind. Falls die Q1-Achse von der X1-Achse getragen wird, so reicht es aus, wenn die X1-Achse nach unten bewegt wird, da in diesem Fall auch die Q1-Achse solidarisch dieser Bewegung folgt. Bei der beschriebenen Abwärtsbewegung wird ein Spannkörper 22 der Werkzeugspindel 21 in eine zentrale Spannöffnung des Werkzeugs 20 eingeführt. In Fig. 5A ist dieser Spannkörper 22 bereits ein Stück in die Spannöffnung des Werkzeugs 20 eingetaucht. Parallel dazu nähert sich der obere Block 69 des Spannsystems 40 dem unteren Block 72.

In Fig. 5B ist die Endposition gezeigt. In dieser Endposition (auch Spannposition genannt) ist der Spannkörper 22 komplett in die Spannöffnung des Werkzeugs 20 eingetaucht, während die beiden Blöcke 69 und 72 Fläche 42 an Fläche 43 liegen. Nun kann das automatische Spannen des Werkzeugs 20 und des Spannsystems 40 vorgenommen werden.

Das Verfahren zum Einrichten der Vorrichtung 100, die zum Bearbeiten eines Bauteils 30 mit einem Werkzeug 20 ausgelegt ist, umfasst somit die folgenden Schritte:
- Bereitstellen des Werkzeugs 20 im Bereich der Vorrichtung 100 (z.B. auf einer Oberfläche OF, wie in Fig. 5A gezeigt).
- Bereitstellen einer Leitungsanordnung 53 im Bereich der Vorrichtung 100, die mit mindestens einer Austrittsdüse 5 bestückt ist, wobei die Leitungsanordnung 53 auf derselben Oberfläche OF, wie in Fig. 5A gezeigt, bereit gestellt werden kann.
- Überführen einer ersten Linearachse A1 der Vorrichtung 100 in eine Wechselposition durch das Bewegen mindestens einer Achse (z.B. der A1-Achse) der Vorrichtung 100. In diesem Schritt kann sich die Q1-Achse gekoppelt mit der A1-Achse bewegen, oder die Q1-Achse bewegt sich solidarisch mit der A1-Achse.
- Zeitgleiches Aufnehmen des Werkzeugs 20 durch eine Werkzeugspindel 21 (z.B. unter Einsatz eines Spannkörpers 20), die von der ersten Linearachse A1 getragen ist, und der Leitungsanordnung 53 samt der mindestens einen Austrittsdüse 51 durch das Spannsystem 40, das direkt oder indirekt von der ersten Linearachse A1 getragen ist, oder das von einer Zusatzachse Q1 getragen ist.

Sobald die Endposition (Spannposition) erreicht ist, die in Fig. 5B gezeigt ist, kann ein automatisierter Spannvorgang durchgeführt werden, um das Werkzeug 20 an der Werkzeugspindel 21 zu spannen. Das Spannen eines Werkzeugs 20 in einer Maschine 100 ist hinlänglich bekannt. Zeitgleich oder nahezu zeitgleich wird ein automatisierter Spannvorgang durchgeführt, um die Leitungsanordnung 53 mittels des Spannsystems 40 der Erfindung zu spannen.

Bei diesem Schritt des automatisierten Spannvorgangs kann eine elektro-mechanische, elektro-magnetische, hydraulische und/oder pneumatische Betätigungsvorrichtung der Vorrichtung 100 betätigt werden, um die beiden Blöcke 69, 72 miteinander zu verbinden.

Zum Bereitstellen des Werkzeugs 20 und der Leitungsanordnung 53 kann beispielweise die Werkstückspindel 31 oder ein Gehäuse 33 der Vorrichtung 100 so in eine Übergabeposition geschwenkt werden, dass sich eine Oberfläche OF in einer horizontalen Lage befindet.

**Bezugszeichenliste**

| | |
|---|---|
| Werkzeug | 20 |
| Werkzeugspindel | 21 |
| Spannkörper | 22 |
| | |
| Werkstück / zu bearbeitendes Bauteil | 30 |
| Werkstückspindel | 31 |
| Schwenkteller | 32 |
| Gehäuse | 33 |
| | |
| Spannsystem | 40 |
| Koppelbereich | 41 |
| erste Fläche | 42 |
| zweite Fläche | 43 |
| | |
| Fluidzufuhrvorrichtung | 50 |
| Austrittsdüse | 51 |
| Fluidleitung | 52 |
| Leitunqsanordnunq/Rinqleitunq | 53 |
| | |
| Fluidkupplung | 61, 62 |
| zweites Kupplungselement | 63 |
| erstes Kupplungselement | 64 |
| Pumpe | 65 |
| Tank | 66 |
| Zwischenplatte | 67 |
| Eintrittsöffnung | 68 |
| oberer Block (Q1-Aufnahme) | 69 |
| Befestiqunqsmittel | 70 |
| Durchgangsöffnung / Austrittsöffnung | 71 |
| unterer Block | 72 |
| Führungsrohr | 73 |
| Fluidleitung | 74 |
| Reinigungsmittelleitung | 75 |
| Durchgangsöffnung | 76 |
| Aufnahmeblock | 77 |
| Blinddeckel | 78 |
| Koppelbereich | 79 |
| Düsenkopf | 80 |
| Fluidblock | 81 |
| Durchqanqsloch | 82 |
| Näherungssensor | 83 |
| O-Rinq | 84 |
| O-Ring | 85 |
| Öffnungen | 86 |
| | |
| Vertikalschlitten | 90 |
| Vorrichtung/Bearbeitungsmaschine | 100 |
| | |
| Werkzeug achse | A1 |
| Schwenkachse | C |
| Computerized Numerical Control | CNC |
| Oberfläche | OF |
| Zusatzachse | Q1 |
| Werkstückachse | B |
| (erste) Linearachse | X1 |
| (zweite) Linearachse | Y |
| (dritte) Linearachse | Z |

## Patentansprüche

1. Vorrichtung (100) zum Bearbeiten eines Bauteils (30) mit einem Werkzeug (20), umfassend
- eine Werkzeugachse (A1) zum Drehantreiben des Werkzeugs (20),
- eine Fluidzufuhrvorrichtung (50) mit einer Leitungsanordnung (53) und mit mindestens einer Austrittsdüse (51), die dazu ausgelegt ist unter Druck ein Fluid durch die mindestens eine Austrittsdüse (51) in Richtung des Werkzeugs (20) abzugeben, wobei die Leitungsanordnung (53) so an der Vorrichtung (100) angeordnet ist, dass sie samt der mindestens einen Austrittsdüse (51) Bewegungen des Werkzeugs (20) solidarisch folgt, um jeweils im relativen räumlichen Bezug zum Werkzeug (20) zu verbleiben,
wobei die Fluidzufuhrvorrichtung (50) ein Spannsystem (40) umfasst, das
- einen Koppelbereich (41) aufweist, und das
- zum automatisierten Spannen der Leitungsanordnung (53) an der Vorrichtung (100) und/oder zum automatisierten Trennen der Leitungsanordnung (53) von der Vorrichtung (100) ausgelegt ist,
- wobei die Vorrichtung (100) eine elektro-mechanische, elektro-magnetische, hydraulische und/oder pneumatische Betätigungsvorrichtung umfasst, die es ermöglicht die Leitungsanordnung (53) im Koppelbereich (41) automatisch von der Vorrichtung (100) zu trennen und/oder die Leitungsanordnung (53) im Koppelbereich (41) automatisch an der Vorrichtung (100) einzuspannen,
- wobei die Vorrichtung (100) eine erste Linearachse (X1) umfasst, wobei die Werkzeugachse (A1) an der ersten Linearachse (X1) angeordnet ist, **dadurch gekennzeichnet, dass**
- sie eine Zusatzachse (Q1) umfasst, welche die Leitungsanordnung (53) samt der mindestens einen Austrittsdüse (51) so trägt, dass die Leitungsanordnung (53) samt der mindestens einen Austrittsdüse (51) relativ zu dem Werkzeug (20) verlagerbar ist, um eine Feineinstellung, Nachführung oder Verschleisskompensation zu ermöglichen, wobei diese Zusatzachse (Q1) zum automatisierten Spannen der Leitungsanordnung (53) einsetzbar ist.

2. Vorrichtung (100) nach Anspruch 1, **dadurch gekennzeichnet, dass** sie im Koppelbereich (41) eine Fluidkupplung (61, 62) umfasst, die dazu ausgelegt ist nach dem automatisierten Spannen eine druckdichte Fluidverbindung zwischen einer Druckseite der Fluidzufuhrvorrichtung (50) und der Leitungsanordnung (53) samt der mindestens einen Austrittsdüse (51) bereit zu stellen.

3. Vorrichtung (100) nach Anspruch 1 oder 2, **dadurch gekennzeichnet, dass** sie im Koppelbereich (41) mindestens eine mechanische Kupplungsvorrichtung umfasst, wobei diese Kupplungsvorrichtung auf der Vorrichtungsseite ein erstes Kupplungselement (63) und auf der Seite der Leitungsanordnung (53) ein zweites Kupplungselement (64) umfasst, wobei das erste Kupplungselement (63) und das zweite Kupplungselement (64) komplementär ausgeführt sind, um im gespannten Zustand schlüssig ineinander zu greifen.

4. Vorrichtung (100) nach Anspruch 3, **dadurch gekennzeichnet, dass** sie mindestens ein Spannnippel als zweites Kupplungselement (64) und mindestens ein Spanntopf, der komplementär zu dem Spannnippel ausgeführt ist, als erstes Kupplungselement (63) umfasst.

5. Vorrichtung (100) nach Anspruch 1, 2 oder 3, **dadurch gekennzeichnet, dass** sie einen Näherungssensor (83) umfasst, der dazu ausgelegt ist bei einer relativen Zustellbewegung der Leitungsanordnung (53) samt der mindestens einen Austrittsdüse (51) ein Signal zu liefern.

6. Vorrichtung (100) nach Anspruch 1, **dadurch gekennzeichnet, dass** die Zusatzachse (Q1) an der ersten Linearachse (X1) der Vorrichtung (100) angeordnet ist.

7. Vorrichtung (100) nach Anspruch 1, **dadurch gekennzeichnet, dass** die Zusatzachse (Q1) separat von der Linearachse (X1) so an der Vorrichtung (100) angeordnet ist, dass sie unabhängig von einer Bewegung der ersten Linearachse (X1) eine Bewegung der Leitungsanordnung (53) samt der mindestens einen Austrittsdüse (51) ermöglicht.

8. Vorrichtung (100) nach Anspruch 6, **dadurch gekennzeichnet, dass** das Spannsystem (40) ein Führungsrohr (73) mit einem oberen Block (69) umfasst, der in dem Koppelbereich (41) mit einem unteren Block (72) verbindbar ist.

9. Vorrichtung (100) nach Anspruch 6, **dadurch gekennzeichnet, dass** das Spannsystem (40) in dem Koppelbereich (41) eine erste Fläche (42) und eine dazu komplementäre zweite Fläche (43) umfasst, wobei in einem eingespannten Zustand die erste Fläche (42) mit der zweiten Fläche (43) verbunden ist.

10. Vorrichtung (100) nach Anspruch 6, **dadurch gekennzeichnet, dass** das Spannsystem (40) in dem Koppelbereich (41) eine Austrittsöffnung (71) und eine Eintrittsöffnung (68) umfasst, die in einem eingespannten Zustand deckend übereinander liegen, wobei im Koppelbereich (41) mindestens ein Dichtring (84) vorgesehen ist, um im eingespannten Zustand für eine druckdichte Verbindung einer Druckseite der Fluidzufuhrvorrichtung (50) mit der Leitungsanordnung (53) zu sorgen.

11. Verfahren zum Einrichten einer Vorrichtung nach einem der voranstehenden Ansprüche (100), umfassend die Schritte:
- Bereitstellen des Werkzeugs (20) im Bereich der Vorrichtung (100),
- Bereitstellen der Leitungsanordnung (53) im Bereich der Vorrichtung (100), die mit der mindestens einen Austrittsdüse (51) bestückt ist,
- Überführen einer ersten Linearachse (X1) der Vorrichtung (100) in eine Wechselposition durch das Bewegen mindestens einer Achse der Vorrichtung (100),
- Aufnehmen des Werkzeugs (20) durch eine Werkzeugspindel (21), die von der ersten Linearachse (X1) getragen ist, und der Leitungsanordnung (53) samt der mindestens einen Austrittsdüse (51) durch das Spannsystem (40), das von der Zusatzachse (Q1) getragen ist, wobei das Aufnehmen des Werkzeugs (20) und das Aufnehmen der Leitungsanordnung (53) nacheinander oder zeitgleich erfolgt, wobei es die folgenden zusätzlichen Schritte umfasst:
a) Durchführen eines automatisierten Spannvorgangs, um das Werkzeug (20) an der Werkzeugspindel (21) zu spannen,
b) Durchführen eines automatisierten Spannvorgangs, um die Leitungsanordnung (53) mittels des Spannsystems (40) zu spannen und dass beim Schritt b) eine elektro-mechanische, elektro-magnetische, hydraulische und/oder pneumatische Betätigungsvorrichtung der Vorrichtung (100) betätigt wird.

12. Verfahren nach Anspruch 11, **dadurch gekennzeichnet, dass** zum Bereitstellen des Werkzeugs (20) und der Leitungsanordnung (53) eine Werkstückspindel (31) oder ein Gehäuse (33) der Vorrichtung (100) so in eine Übergabeposition geschwenkt wird, dass sich eine Oberfläche (OF) in einer horizontalen Lage befindet, wobei das Werkzeug (20) und die Leitungsanordnung (53) nebeneinander auf dieser Oberfläche (OF) bereitgestellt werden.

## Claims

1. Apparatus (100) for machining a component (30) with a tool (20), comprising
- a tool axis (A1) for rotatably driving the tool (20),
- a fluid feed apparatus (50) with a line assembly (53) and at least one outlet nozzle (51), which is formed to emit a fluid under pressure through the at least one outlet nozzle (51) in the direction of the tool (20), wherein the line assembly (53) is arranged on the apparatus (100) in such a way that it jointly follows the movements of the tool (20) together with the at least one outlet nozzle (51) in order to remain in a relative spatial reference to the tool (20),
wherein the fluid feed apparatus (50) comprises a clamping system (40) which
- comprises a coupling region (41), and which
- is formed for the automated clamping of the line assembly (53) on the apparatus (100) and/or for the automated disconnection of the line assembly (53) from the apparatus (100),
- wherein the apparatus (100) comprises an electromechanical, electromagnetic, hydraulic and/or pneumatic actuating apparatus, which allows automatically disconnecting the line assembly (53) from the apparatus (100) in the coupling region (41) and/or automatically clamping the line assembly (53) to the apparatus (100) in the coupling region (41)
- **characterized in that** the apparatus (100) comprises a first linear axis (A1), wherein the tool axis (A1) is arranged on the first linear axis (A1), and that it comprises an additional axis (Q1) which carries the line assembly (53) plus the at least one outlet nozzle (51) in such a way that the line assembly (53) can be displaced with the at least one outlet nozzle (51) relative to the tool (20) in order to enable a fine adjustment, readjustment or compensation for wear and tear, wherein said additional axis (Q1) can be used for the automated clamping of the line assembly (53).

2. An apparatus (100) according to claim 1, **characterized in that** it comprises a fluid coupling (61, 62) in the coupling region (41), said fluid coupling being formed, after the automated clamping, to provide a pressure-tight fluid connection between a pressure side of the fluid feed apparatus (50) and the line assembly (53) plus the at least one outlet nozzle (51).

3. An apparatus (100) according to claim 1 or 2, **characterized in that** it comprises at least one mechanical coupling apparatus in the coupling region (41), wherein said coupling apparatus comprises a first coupling element (63) on the apparatus side and a second coupling element (64) on the side of the line assembly (53), wherein the first coupling element (63) and the second coupling element (64) are formed in a complementary manner with respect to each other in order to engage conclusively into each other in the clamped state.

4. An apparatus (100) according to claim 3, **characterized in that** it comprises at least one clamping nipple as a second coupling element (64) and at least one clamping cup, which is formed in a complementary manner in relation to the clamping nipple, as the first coupling element (63).

5. An apparatus (100) according to claim 1, 2 or 3, **characterized in that** it comprises a proximity sensor (83) which is formed to supply a signal during a relative advancing movement of the line assembly (53) plus the at least one outlet nozzle (51).

6. An apparatus (100) according to claim 1, **characterized in that** the additional axis (Q1) is arranged on the first linear axis (A1) of the apparatus (100).

7. An apparatus (100) according to claim 1, **characterized in that** the additional axis (Q1) is arranged separately from the linear axis (A1) on the apparatus (100) in such a way that it enables a movement of the line assembly (53) plus the at least one outlet nozzle (51) independently of a movement of the first linear axis (A1).

8. An apparatus (100) according to claim 6, **characterized in that** the clamping system (40) comprises a guide tube (73) with an upper block (69) which can be coupled to a bottom block (72) in the coupling region (41).

9. An apparatus (100) according to claim 6, **characterized in that** the clamping system (40) comprises a first surface (42) in the coupling region (41) and a second surface (43) which is complementary thereto, wherein the first surface (42) is connected to the second surface (43) in a clamped state.

10. An apparatus (100) according to claim 6, **characterized in that** the clamping system (40) comprises an outlet opening (71) and an inlet opening (68) in the coupling region (41), which in the clamped state lie on top of each other in a covering fashion, wherein at least one sealing ring (84) is provided in the coupling region (41) in order to ensure a pressure-tight connection of a pressure side of the fluid feed apparatus (50) with the line assembly (53) in the clamped state.

11. A method for setting up an apparatus (100) which is formed for machining a component (30) with a tool (20), comprising the following steps:
- providing a tool (20) in the region of the apparatus (100),
- providing a line assembly (53) in the region of the apparatus (100), which is fitted with at least one outlet nozzle (51),
- transferring a first linear axis (X1) of the apparatus (100) to a changing position by moving at least one axis of the apparatus (100),
- receiving the tool (20) by a tool spindle (21) which is carried by the first linear axis (X1), and the line assembly (53) plus the at least one outlet nozzle (51) by a clamping system (40) which is carried by the additional axis (Q1), wherein the receiving of the tool (20) and the receiving of the line assembly (53) occur successively or simultaneously, wherein it comprises the following additional step:
a) performing an automated clamping process in order to clamp the tool (20) onto the tool spindle (21),
b) performing an automated clamping process in order to clamp the line assembly (53) by means of the clamping system (40), and that during the step b) an electromechanical, electromagnetic, hydraulic and/or pneumatic actuating apparatus of the apparatus (100) is actuated.

12. A method according to claim 11, **characterized in that** for providing the tool (20) and the line assembly (53) a tool spindle (31) or a housing (33) of the apparatus (100) is pivoted to a transfer position in such a way that a surface (OF) is in a horizontal position, wherein the tool (20) and the line assembly (53) are provided on said surface (OF) adjacent to each other.

## Revendications

1. Dispositif (100) pour usiner un composant (30) avec un outil (20) comprenant
- un axe d'outil (A1) pour entraîner l'outil (20) en rotation,
- un dispositif d'introduction de fluide (50) avec un système de conduites (53) et avec au moins une buse de sortie (51) conçu pour, sous pression, délivrer un fluide à travers la au moins une buse de sortie (51) en direction de l'outil (20), le système de conduites (53) étant agencé sur le dispositif (100) de telle façon qu'il suit solidairement, avec la au moins une buse de sortie (51), les mouvements de l'outil (20), pour rester à chaque fois dans une relation spatiale relative par rapport à l'outil (20),
le dispositif d'introduction de fluide (50) comprenant un système de serrage (40) qui présente une zone de couplage (41) et qui est conçu pour serrer de façon automatisée le système de conduites (53) sur le dispositif (100) et/ou pour séparer de façon automatisée le système de conduites (53) du dispositif (100), le dispositif (100) comprenant un dispositif d'actionnement électromécanique, électromagnétique, hydraulique et/ou pneumatique qui permet de séparer automatiquement le système de conduites (53) du dispositif (100) et/ou de fixer automatiquement le système de conduites (53) sur le dispositif (100) dans la zone de couplage (41) **caractérisé en ce qu'**il comprend un premier axe linéaire (A1), l'axe d'outil (A1) étant agencé sur le premier axe linéaire (A1), et **en ce qu'**il comprend un axe supplémentaire (Q1) qui porte le système de conduites (53) avec la au moins une buse de sortie (51) de sorte que le système de conduites (53) avec la au moins une buse de sortie (51) peut être déplacé par rapport à l'outil (20) pour permettre un réglage fin, un ajustement ou une compensation d'usure, cet axe supplémentaire (Q1) pouvant être utilisé pour serrer de façon automatisée le système de conduites (53).

2. Dispositif (100) selon la revendication 1, **caractérisé en ce qu'**il comprend dans la zone de couplage (41) un raccord de fluide (61, 62) qui est conçu, après le serrage automatisé, pour fournir une communication de fluide étanche entre un côté pression du dispositif d'introduction de fluide (50) et le système de conduites (53) avec la au moins une buse de sortie (51).

3. Dispositif (100) selon la revendication 1 ou 2, **caractérisé en ce qu'**il comprend dans la zone de couplage (41) au moins un dispositif de couplage mécanique, ce dispositif de couplage comprenant du côté du dispositif un premier élément de couplage (63) et du côté du système de conduites (53) un deuxième élément de couplage (64), le premier élément de couplage (63) et le deuxième élément de couplage (64) étant réalisés complémentaires pour pouvoir s'engager l'un dans l'autre en position serrée.

4. Dispositif (100) selon la revendication 3, **caractérisé en ce qu'**il comprend au moins un raccord de serrage comme deuxième élément de couplage (64) et au moins un mandrin de serrage comme premier élément de couplage (63) réalisé complémentaire au raccord de serrage.

5. Dispositif (100) selon la revendication 1, 2 ou 3, **caractérisé en ce qu'**il comprend un capteur de proximité (83) qui est conçu pour fournir un signal lors d'un mouvement d'avance relatif du système de conduites (53) avec la au moins une buse de sortie (51).

6. Dispositif (100) selon la revendication 1, **caractérisé en ce que** l'axe supplémentaire (Q1) est agencé sur le premier axe linéaire (A1) du dispositif (100).

7. Dispositif (100) selon la revendication 1, **caractérisé en ce que** l'axe supplémentaire (Q1) est agencé sur le dispositif (100) séparément de l'axe linéaire (A1), de sorte qu'il permet, indépendamment d'un mouvement du premier axe linéaire (A1), un mouvement du système de conduites (53) avec la au moins une buse de sortie (51).

8. Dispositif (100) selon la revendication 1, **caractérisé en ce que** le système de serrage (40) comprend un tube de guidage (73) avec un bloc supérieur (69) qui peut être raccordé dans la zone de couplage (41) avec un bloc inférieur (72).

9. Dispositif (100) selon la revendication 6, **caractérisé en ce que** le système de serrage (40) comprend dans la zone de couplage (41) une première surface (42) et une deuxième surface (43) complémentaire à cette dernière, en position serrée, la première surface (42) étant raccordée à la deuxième surface (43).

10. Dispositif (100) selon la revendication 6, **caractérisé en ce que** le système de serrage (40) comprend dans la zone de couplage (41) une ouverture de sortie (71) et une ouverture d'entrée (68) qui, en position serrée, se superposent, dans lequel il est prévu dans la zone de couplage (41) au moins une bague d'étanchéité (84) pour garantir, en position serrée, une liaison étanche entre le côté pression du dispositif d'introduction de fluide (50) et le système de conduites (53).

11. Procédé pour monter un dispositif selon l'une des revendications précédentes (100) comprenant les étapes consistant à :
- fournir l'outil (20) dans la zone du dispositif (100),
- fournir le système de conduites (53) dans la zone du dispositif (100) qui est équipé de la au moins une buse de sortie (51),
- passer un premier axe linéaire (X1) du dispositif (100) dans une position de remplacement en déplaçant au moins un axe du dispositif (100),
- prendre l'outil (20) par une broche d'outil (21) qui est portée par le premier axe linéaire (X1), et le système de conduites (53) avec la au moins une buse de sortie (51) par le système de serrage (40) qui est porté par un axe supplémentaire (Q1), la réception de l'outil (20) et la réception du système de conduites (53) intervenant l'une après l'autre ou en même temps, comprenant les étapes supplémentaires suivantes consistant à :
a) réaliser un processus de serrage automatisé pour serrer l'outil (20) sur la broche d'outil (21),
b) réaliser un processus de serrage automatisé pour serrer le système de conduites (53) à l'aide du système de serrage (40) et en ce que lors de l'étape b) on actionne un dispositif d'actionnement électromécanique, électromagnétique, hydraulique et/ou pneumatique du dispositif (100).

12. Procédé selon la revendication 11, **caractérisé en ce que**, pour fournir l'outil (20) et le système de conduites (53), une broche de pièce (31) ou un boîtier (33) du dispositif (100) est pivoté(e) en position de transfert de sorte qu'une surface (OF) se trouve en position horizontale, l'outil (20) et le système de conduites (53) étant fournis l'un à côté de l'autre sur cette surface (OF).
